# EUROPEAN PATENT SPECIFICATION

(11) **EP 1 249 018 B1**
(45) Date of publication and mention of the grant of the patent: **11.05.2005**
(21) Application number: 00991439.1
(22) Date of filing: 21.12.2000
(51) Int. Cl.: G11B 20/00

(54) **DIGITAL CONTENT SECURITY**
DIGITALE INHALTSSICHERUNG
SECURITE DE CONTENU NUMERIQUE

(30) Priority: 21.12.1999 US 469844
(43) Date of publication of application: 16.10.2002
(73) Proprietor: Lockstream Corp., Bellevue, WA 98005 (US)
(72) Inventor: SEARLE, Scott, Kirkland, WA 98033 (US); ROSE, Floyd, Aspen, CO 81611 (US)
(74) Representative: Hanna, Peter William Derek
(86) International application number: PCT/US2000/035422
(87) International publication number: WO 2001/046952

(56) References cited:
- EP-A- 1 093 120
- US-A- 5 337 357
- US-A- 5 694 381
- US-A- 5 905 797
- PATENT ABSTRACTS OF JAPAN vol. 1998, no. 13, 30 November 1998 (1998-11-30) & JP 10 207808 A (MITSUMI ELECTRIC CO LTD), 7 August 1998 (1998-08-07)
- PATENT ABSTRACTS OF JAPAN vol. 1996, no. 04, 30 April 1996 (1996-04-30) & JP 07 334916 A (RICOH CO LTD), 22 December 1995 (1995-12-22)

## Description

### TECHNICAL FIELD

This invention relates generally to digital content, such as audio, video, image and text data, and more particularly to security of such content.

### BACKGROUND ART

Distribution of content, such as audio data, video data, image data, and text data, in a digital manner has become increasingly popular. For example, whereas before music was sold on analog cassettes and records, today music is sold predominantly on compact discs (CD's). Digital video discs (DVD's) are also predicted to supplant analog videocassettes as the primary manner by which movies are sold to the public. Electronic books, which store textual information digitally, are even beginning to appear, perhaps to the detriment of paper, or analog, books. Furthermore, digital content is increasingly being distributed over the Internet, in lieu of or in addition to physical media distribution via CD, DVD, etc. For example, music is already popularly distributed over the Internet, in the form of MP3 files, as known within the art.

For the owners and distributors of digital content, however, the security of the digital content, so that a purchased copy cannot be illegally duplicated, looms large. CD-ROM devices for computers, that are able to copy and create audio CD's, are decreasing in price, and becoming a popular peripheral bought by the general public. Such devices, however, allow a user to easily make illegal copies of audio CD's, which can cut into their legitimate sales. Furthermore, MP3 files are easily "ripped" from existing audio CD's, and transmitted to others over the Internet illegally. While MP3 files are not a verbatim copy of their audio CD source content, the compression scheme used is so good that most listeners cannot tell the difference. This also worries content owners and distributors.

For these and other reasons, there is a need for the present invention.

US5694381 discloses a data record medium adapted for recording medium information as non-erasable data and copy management information. The medium information represents the type of data record medium including at least a read-only type and a write enable type. The copy management information represents whether information data recorded on the data record medium is a copy enable state or a copy prohibition state. The medium information and the copy management information are detected from the data record medium. The information data is read from the data record. The controlling unit substantially prohibits the reproducing unit from outputting the information data when the medium information satisfies both a first condition representing that the medium information is not at least the read-only type and a second condition representing that the copy management information is the copy prohibition state.

EP1093120, which is only prior art by virtue of Article 54(3) EPC for those states for which the designation fees were paid, discloses a disc in the area of the disc available for recording is divided into an inner and an outer circular recording area. The table of contents, in the lead-in area of the inner recording area, includes a data record referring to the outer recording area and its table of contents. Also included is a file which contains an instruction for Windows 95/98/ NT to start a program when the disc is inserted into a CD-ROM drive. The program prevents the reading of all other data stored on the storage medium.

### DISCLOSURE OF INVENTION

The invention relates to security for digital content. In one embodiment, an optical disc, such as an audio CD or a video DVD, that is playable on an optical disc player, such as a CD player or a DVD player, as well as on an optical disc device of a computerized device, such as a CD-ROM or a DVD device of a computer, has data stored thereon. The data includes first data representing content that is playable on the optical disc player and on the optical disc device of the computerized device, such that when the disc is inserted into the optical disc player, the content is immediately accessible. The data also includes second data representing a computer program which is designed to automatically run when the disc is inserted into the optical disc device of the computerized device. The program is designed to prevent access to the content except as permitted by the program -- for example, by unmounting the disc so that it is not accessible to other programs except as controlled by the program.

In a second embodiment of the invention, a computer includes an optical disc device and an optical disc device driver designed to control access to discs inserted into the device by programs running on the computer. The access is controlled by the driver at a system level. In particular, access by the programs running on the computer to optical discs of a predetermined type is prevented, except as permitted by the driver.

In a third embodiment of the invention, a computer includes a sound card that has recording inputs, and a sound card driver. The sound card driver is designed to disable the recording inputs of the card when it detects a predetermined signature, such as a watermark, within audio data being played through the sound card. Each of the embodiments of the invention described in this summary provides for digital content security. Each embodiment can be used alone, or in conjunction with one or both of the other embodiments.

The invention includes computer-implemented methods, machine-readable media, computerized systems, and computers of varying scopes. Other aspects, embodiments and advantages of the invention, beyond those described here, will become apparent by reading the detailed description and with reference to the drawings.

### BRIEF DESCRIPTION OF DRAWINGS

FIGs. 1-3 are diagrams of systems according to varying embodiments of the invention; and,
FIG. 4 is a diagram of a representative computerized device, such as a computer, in conjunction with which embodiments of the invention can be practiced.

### MODE(S) FOR CARRYING OUT INVENTION

In the following detailed description of exemplary embodiments of the invention, reference is made to the accompanying drawings which form a part hereof, and in which is shown by way of illustration specific exemplary embodiments in which the invention may be practiced. These embodiments are described in sufficient detail to enable those skilled in the art to practice the invention, and it is to be understood that other embodiments may be utilized and that logical, mechanical, electrical and other changes may be made without departing from the spirit or scope of the present invention. The following detailed description is, therefore, not to be taken in a limiting sense, and the scope of the present invention is defined only by the appended claims.

Some portions of the detailed descriptions which follow are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated.

It has proven convenient at times, principally for reasons of common usage, to refer to these signals as bits, values, elements, symbols, characters, terms, numbers, or the like. It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as processing or computing or calculating or determining or displaying or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

### Security via Computer Program Stored on an Optical Disc

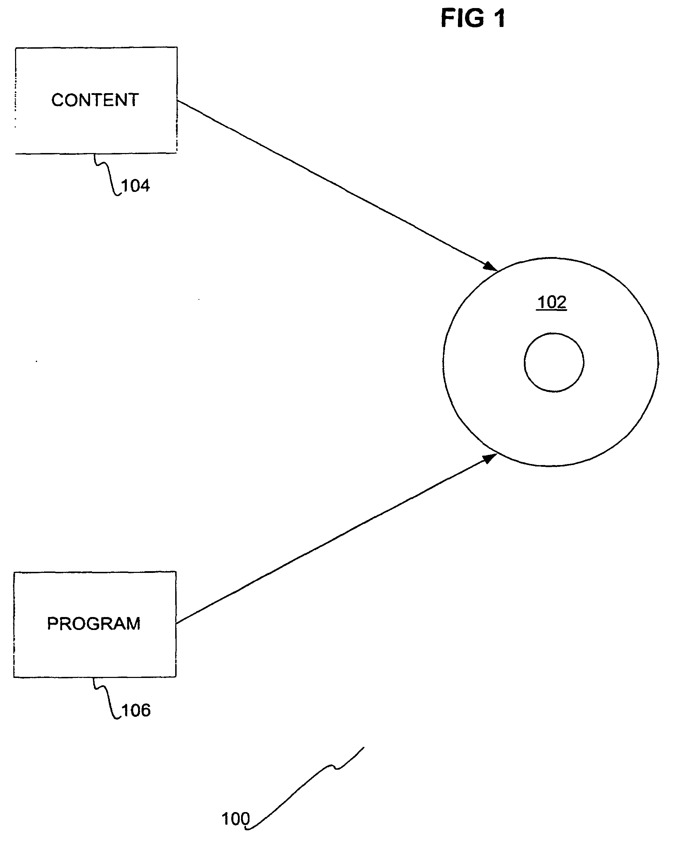

In this section of the detailed description, content security via a computer program stored on an optical disc is described. In the diagram of FIG. 1, a system 100 includes an optical disc 102, first data representing content 104, and second data representing a computer program 104. The first data and the second data are stored on the optical disc 102. The optical disc 102 can in varying embodiments be a CD-ROM, a DVD-ROM, or another type of optical disc; the invention is not so limited. The content 104 can in varying embodiments be audio data, video data, image data, text data, or a combination thereof; the invention is not so limited.

The first data representing the content 104 is playable on an optical disc player. such as a stand-alone CD player, a stand-alone DVD player, etc.; the invention is not so limited. The content 104 is also playable on an optical disc device of a computerized device, such as a CD-ROM player, a DVD-ROM player, a CD-RW device, a CD-R device, and a DVD-RAM device; again, the invention is not so limited. The first data is such that upon insertion of the optical disc into the optical disc player, the content is immediately accessible. For example, the content 104 can be played when the disc 102 is inserted into an audio CD player of a car, or part of a home-stereo system.

The second data representing the program 106 is designed to automatically run upon insertion of the disc 102 into the optical disc device of the computerized device. That is, the computer program 106 is an auto-run program. For example, in the context of versions of the Microsoft Windows operation system, this feature is known as AutoPlay, that allows the program 106 to automatically operate when inserted into the optical disc device. When the disc 102 is inserted into the device, the operating system looks for a file called AUTORUN.INF on the disc 102, such that upon finding it, the operating system opens it and carries out its instruction, to start the program 106.

Furthermore, the program 106 is designed to prevent access to the content 104 on the computerized device - for example, by other programs running on the device - except as permitted by the program 106. In one embodiment, this is accomplished by unmounting the optical disc 102 from the device, such that access to the content 104 is controlled by the program 106. Unmounting is the process of logically removing the disc 102 from active use by the operating system of the device, as compared to mounting, which is the process of logically making the disc 102 accessible. Furthermore, in one embodiment, the program 106 is designed to remain loaded in the computerized device, such that subsequent optical discs that are inserted into the optical disc device also have access thereto controlled by the program 106. In one embodiment, the program 106 can be a terminate-and-stay-resident (TSR) program, such that it remains loaded in memory even when it is not running, so that it can be quickly invoked later.

Thus, the system 100 of FIG. 1 provides for content security, because access to the content 104 when the disc 102 is inserted into an optical disc device of a computerized device, such as a computer, is controlled by the program 106 that automatically runs upon the insertion of the disc 102. However, the disc 102 otherwise functions normally as, for example, an audio CD or a video DVD, when it is inserted into an optical disc player, such as a CD player or a DVD player, that is not connected to a computerized device like a computer. That is, the security is such that the disc 102 has access thereto controlled only in the context of a computerized device, where the disc 102 can be easily copied, such that the program 106 can be designed to prevent such copying. The disc 102 functions normally when not in this context.

It is noted that in another embodiment of the invention related to the system 100 of FIG. 1, a computer-implemented method includes writing the first data onto the optical disc 102, and then the second data onto the optical disc 102. The computer-implemented method can be realized at least in part as one or more programs running on a computer -- that is, as a program executed from a computer-readable medium such as a memory by a processor of a computer. The programs themselves are desirably storable on a machine-readable medium such as a floppy disk or a CD-ROM, for distribution and installation and execution on another computer.

### Content Security via Optical Disc Device Driver

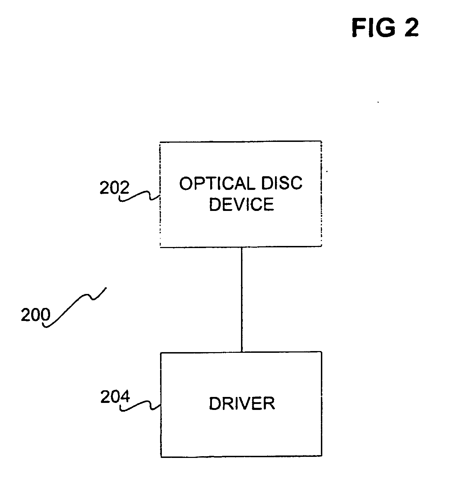

In this section of the detailed description, content security via an optical disc device driver is described. In the diagram of FIG. 2, the system 200 includes an optical disc device 202, and a driver 204. The device 202 is operable on a computerized device, which may be a part of the system 200, and in varying embodiments can be a CD-ROM player, a DVD-ROM player, a CD-RW player, a CD-RW device, a CD-R device, and a DVD-RAM device; the invention is not so limited. The driver 204 is a hardware device (for example, which can be a part of the device 202 itself) or a computer program that controls or regulates the device 202. The driver 204 is thus a device-specific control program that enables a computerized device to work with the device 202, permitting the computerized device to communicate with the device 202. Thus, in most cases, the driver 204 manipulates the hardware in order for such communication to occur. In one embodiment, the driver 204 is a system-level, or lower-level, driver, as known within the art, such that the device 202 will not work properly, if at all, without the driver 204.

The driver 204 is designed to control access to optical discs inserted into the optical disc device 202. Such optical discs include, but are not limited to, CD-ROM's, DVD-ROM's, as well as other types of optical discs. The driver 204 controls access to the discs by other programs running on the computerized device, desirably at a system level. It does this by preventing access to the optical discs inserted into the device 202 that are of a predetermined type, except as permitted by the driver 204. For example, the discs may having a predetermined identifying characteristic, such as a signature or a watermark, as known within the art, that, if present, causes the driver 204 to not allow, for example, the discs to be played except by programs it knows and trusts will not allow illegal copying of the discs. In one embodiment, the driver 204 is developed from the ground up as having this functionality. In another embodiment. the driver 204 is a modified driver, such as add-on code grafted onto an already existing driver, to add this functionality.

It is noted that in another embodiment of the invention related to the system 200 of FIG. 2, a computer-implemented optical device driver includes detecting insertion of an optical disc into an optical disc device of a computerized device. The method then determines whether the disc is of the predetermined type; if so, then the method prevents access thereto by programs running on the computer. at a system level. The method then may only allow access to the disc under one or more predetermined conditions that it determines to be true - for example, that the program desiring access to the disc is known and trusted not to allow illegal copies of the disc to be made. The computer-implemented method can be realized at least in part as one or more programs running on a computer -- that is, as a program executed from a computer-readable medium such as a memory by a processor of a computer. The programs themselves are desirably storable on a machine-readable medium such as a floppy disk or a CD-ROM, for distribution and installation and execution on another computer.

### Content Security via Sound Card Driver

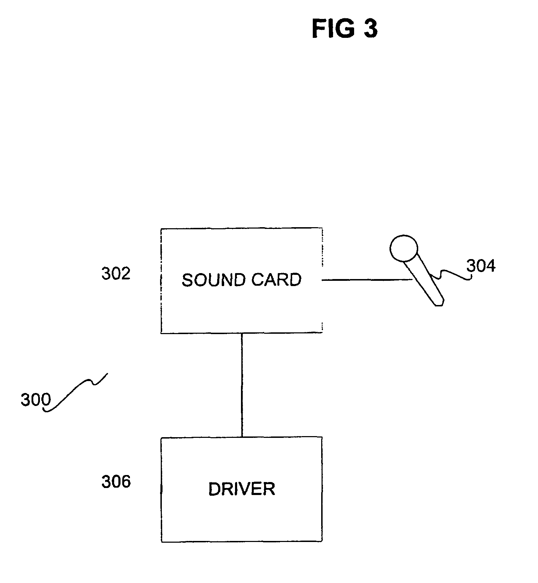

In this section of the detailed description, content security via a sound card driver is described. In the diagram of FIG. 3, the system 300 includes a sound card 302 having recording inputs 304 (represented in FIG. 3 as a microphone), and a driver 306. The sound card 302 is operable on a computerized device. which may be a part of the system 300. The sound card 302 is a type of expansion board on computers that allows the playback and recording of sounds, such as from WAV or MIDI files, or from audio CD's or CD-ROM's, as known within the art. The sound card 302 can also be referred to as a sound board, or a sound adapter. Furthermore, in some computer systems, the sound card 302 is integrated onto the motherboard itself, such that it is not truly a hardware "card," but is still referred to as such for the purposes herein. The recording inputs 304 are the inputs of the card 302 that allow for sound to be input into the card 302. They are also referred to as "line in" inputs.

The driver 306 is a hardware device (for example, which can be a part of the device 302 itself) or a computer program that controls or regulates the card 302. The driver 306 is thus a device-specific control program that enables a computerized device to work with the card 302, permitting the computerized device to communicate with the card 302. Thus. in most cases, the driver 306 manipulates the hardware in order for such communication to occur. In one embodiment, the driver 306 is a system-level, or lower-level, driver, such that the card 302 will not work properly, if at all, without the driver 306.

The driver 306 is designed to disable the recording inputs 304 of the sound card 302 upon detecting a predetermined signature within an audio data stream being played through the sound card 302. That is, audio data is streamed through the sound card 302 when it is desired to be played, such that the sound of the audio data can be heard emanating from speakers, for example, communicatively coupled to the sound card 302. In one embodiment, the predetermined signature can be a digital watermark, as known within the art, that is detectable by the driver 306. Thus, if such a signature if present, the driver 306 knows that the audio data stream being played through the card 302 is, for example, copyrighted subject matter, such that the recording inputs 302 are disabled to prevent illegal copying of the audio data. In one embodiment, the driver 306 is developed from the ground up as having this functionality. In another embodiment, the driver 306 is a modified driver, such as add-on code grafted onto an already existing driver, to add this functionality.

It is noted that in another embodiment of the invention related to the system 300 of FIG. 3, a computer-implemented sound card driver includes monitoring an audio data stream being played through a sound card, to determine whether the stream includes a predetermined signature. If the stream does, then the method disables the recording inputs of the sound card, to prevent unauthorized and/or illegal copying of the audio data. The computer-implemented method can be realized at least in part as one or more programs running on a computer -- that is, as a program executed from a computer-readable medium such as a memory by a processor of a computer. The programs themselves are desirably storable on a machine-readable medium such as a floppy disk or a CD-ROM, for distribution and installation and execution on another computer.

### Representative Computerized Device

In this section of the detailed description, a representative computerized device in conjunction with which embodiments of the invention may be practiced is described. However, the invention is not limited to the representative computerized device described herein. The computerized device can be a computer, such as a desktop, laptop, handheld or palmtop computer. for example, a PDA device. an MP3 device, as known within the art. etc.; the invention is not limited to any device particularly recited herein.

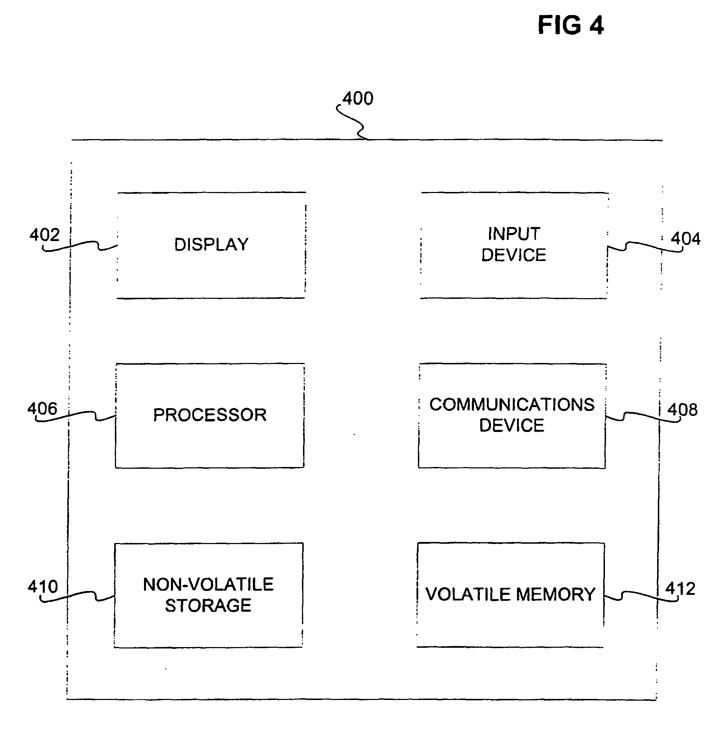

The computerized device is shown in block diagram form in FIG. 4. The device 400 desirably includes one or more of desirably but not necessarily each of the following components. The display 402 can include a flat-panel display, such as a liquid crystal display (LCD), or a cathode-ray tube (CRT) display. The input device 404 can include a keyboard, a pointing device such as a mouse, trackball or touch pad, a touch screen, one or more buttons, etc. The processor 406 executes instructions implementing methods of varying embodiments of the invention. The communications device 408 can be used to communicate with another computer or other such device. The device 408 may be a network adapter, a modem, a wireless transceiver, etc. The non-volatile storage 410 can include a hard disk drive, and/or non-volatile memory such as flash and compact flash memory, such as in the form of memory cards. The volatile memory 412 typically includes a version of dynamic random-access memory (DRAM), as known within the art.

The computerized device, when used to implement the systems of FIGs. 1-3, can, therefore, have the additional components as recited in the descriptions of these systems. For example, the computer device may include an optical disc device, an optical disc device driver, a sound card, and/or a sound card driver. The invention is not so limited.

### Conclusion

Although specific embodiments have been illustrated and described herein, it will be appreciated by those of ordinary skill in the art that any arrangement which is calculated to achieve the same purpose may be substituted for the specific embodiments shown. This application is intended to cover any adaptations or variations of the present invention. Therefore, it is manifestly intended that this invention be limited only by the claims.

## Claims (Claims for the following Contracting State(s): BE, CH, CY, DK, FI, GR, IE, IT, LI, LU, MC, PT, SE, TR)

1. An optical disc playable on an optical disc player and on an optical disc device of a computerized device, the disc having stored thereon:
first data representing content playable on the optical disc player and the optical disc device of the computerized device, such that upon insertion of the optical disc into the optical disc player the content is accessible immediately; and,
second data representing a computer program designed to automatically run upon insertion of the optical disc into the optical disc device of the computerized device, the computer program further designed to prevent access to the content except as permitted thereby.

2. The disc of claim 1, wherein the computer program is further designed to remain loaded in the computerized device, such that subsequent optical discs inserted into the optical disc device have access thereto controlled by the computer program as well.

3. The disc of claim 1, wherein the computer program is to prevent access to the content except as permitted thereby by unmounting the optical disc from the computerized device, such that access to the content by the computerized device is controlled by the computer program.

4. The disc of claim 1, wherein the disc comprises one of: a CD-ROM, and a DVD-ROM.

5. The disc of claim 1, wherein the optical disc player comprises one of: a CD player, and a DVD player.

6. The disc of claim 1, wherein the optical disc device comprises one of: a CD-ROM player, a DVD-ROM player, a CD-RW device, a CD-R device, and a DVD-RAM device.

7. The disc of claim 1, wherein the computerized device comprises one of: a computer, and a personal-digital-assistant (PDA) device.

## Claims (Claims for the following Contracting State(s): AT, DE, ES, FR, GB, NL)

1. An optical disc playable on an optical disc player and on an optical disc device of a computerized device, the disc having stored thereon:
first data representing content playable on the optical disc player and the optical disc device of the computerized device, such that upon insertion of the optical disc into the optical disc player the content is accessible immediately; and,
second data representing a computer program designed to automatically run upon insertion of the optical disc into the optical disc device of the computerized device, the computer program further designed to prevent access to the content except as permitted thereby, wherein the computer program is further designed to remain loaded in the computerized device, such that subsequent optical discs inserted into the optical disc device have access thereto controlled by the computer program as well.

2. The disc of claim 1, wherein the computer program is to prevent access to the content except as permitted thereby by unmounting the optical disc from the computerized device, such that access to the content by the computerized device is controlled by the computer program.

3. The disc of claim 1, wherein the disc comprises one of: a CD-ROM, and a DVD-ROM.

4. The disc of claim 1, wherein the optical disc player comprises one of: a CD player, and a DVD player.

5. The disc of claim 1, wherein the optical disc device comprises one of: a CD-ROM player, a DVD-ROM player, a CD-RW device, a CD-R device, and a DVD-RAM device.

6. The disc of claim 1, wherein the computerized device comprises one of: a computer, and a personal-digital-assistant (PDA) device.

## Patentansprüche (Patentansprüche für folgende(n) Vertragsstaat(en): BE, CH, CY, DK, FI, GR, IE, IT, LI, LU, MC, PT, SE, TR)

1. Bildplatte, die auf einem Bildplattenabspielgerät und auf einer Bildplattenabspielvorrichtung einer Computervorrichtung abgespielt werden kann, wobei die Bildplatte darauf gespeichert umfasst:
erste Daten, die einen Inhalt darstellen, der auf dem Bildplattenabspielgerät und der Bildplattenvorrichtung der Computervorrichtung abgespielt werden kann, so dass beim Einlegen der Bildplatte in das Bildplattenabspielgerät unverzüglich auf den Inhalt zugegriffen werden kann; und
zweite Daten, die ein Computerprogramm darstellen, das dazu ausgelegt ist, beim Einlegen der Bildplatte in die Bildplattenvorrichtung der Computervorrichtung automatisch abzulaufen, das Computerprogramm darüber hinaus dazu ausgelegt ist, einen Zugriff auf den Inhalt mit Ausnahme dessen, was dadurch zugelassen wird, zu verhindern.

2. Platte nach Anspruch 1, wobei das Computerprogramm darüber hinaus dazu ausgelegt ist, in der Computervorrichtung geladen zu bleiben, so dass nachfolgende Bildplatten, die in die Bildplattenvorrichtung eingelegt werden, darauf Zugriff haben und auch vom Computerprogramm gesteuert werden.

3. Platte nach Anspruch 1, wobei das Computerprogramm einen Zugriff auf den Inhalt mit Ausnahme dessen, was dadurch zugelassen wird, verhindern soll, indem die Bildplatte von der Computervorrichtung so außer Betrieb genommen wird, dass ein Zugriff auf den Inhalt durch die Computervorrichtung vom Computerprogramm gesteuert wird.

4. Platte nach Anspruch 1, wobei es sich bei der Platte handelt um; eine CD-ROM oder eine DVD-ROM.

5. Platte nach Anspruch 1, wobei es sich bei dem Bildplattenabspielgerät handelt um: einen CD-Player oder einen DVD-Player.

6. Platte nach Anspruch 1, wobei es sich bei dem Bildplattenabspielgerät handelt um: einen CD-ROM-Player, einen DVD-ROM-Player, eine CD-RW-Vorrichtung (Vorrichtung zum mehrmaligen Beschreiben einer CD), eine CD-R-Vorrichtung (Vorrichtung zum einmaligen Beschreiben einer CD), oder eine DVD-RAM-Vorrichtung (Vorrichtung zum Überschreiben einer Bildplatte).

7. Platte nach Anspruch 1, wobei die Computervorrichtung umfasst: einen Computer oder eine PDA-Vorrichtung (PDA - *Personal Digital Assistant*).

## Patentansprüche (Patentansprüche für folgende(n) Vertragsstaat(en): AT, DE, ES, FR, GB, NL)

1. Bildplatte, die auf einem Bildplattenabspielgerät und auf einer Bildplattenabspielvorrichtung einer Computervorrichtung abgespielt werden kann, wobei die Bildplatte darauf gespeichert umfasst:
erste Daten, die einen Inhalt darstellen, der auf dem Bildplattenabspielgerät und der Bildplattenvorrichtung der Computervorrichtung abgespielt werden kann, so dass beim Einlegen der Bildplatte in das Bildplattenabspielgerät unverzüglich auf den Inhalt zugegriffen werden kann; und
zweite Daten, die ein Computerprogramm darstellen, das dazu ausgelegt ist, beim Einlegen der Bildplatte in die Bildplattenvorrichtung der Computervorrichtung automatisch abzulaufen, das Computerprogramm darüber hinaus dazu ausgelegt ist, einen Zugriff auf den Inhalt mit Ausnahme dessen, was dadurch zugelassen wird, zu verhindern, wobei das Computerprogramm darüber hinaus dazu ausgelegt ist, in der Computervorrichtung geladen zu bleiben, so dass nachfolgende Bildplatten, die in die Bildplattenvorrichtung eingelegt werden, darauf Zugriff haben und auch vom Computerprogramm gesteuert werden.

2. Platte nach Anspruch 1, wobei das Computerprogramm einen Zugriff auf den Inhalt mit Ausnahme dessen, was dadurch zugelassen wird, verhindern soll, indem die Bildplatte von der Computervorrichtung so außer Betrieb genommen wird, dass ein Zugriff auf den Inhalt durch die Computervorrichtung vom Computerprogramm gesteuert wird.

3. Platte nach Anspruch 1, wobei es sich bei der Platte handelt um: eine CD-ROM oder eine DVD-ROM.

4. Platte nach Anspruch 1, wobei es sich bei dem Bildplattenabspielgerät handelt um: einen CD-Player oder einen DVD-Player.

5. Platte nach Anspruch 1, wobei es sich bei dem Bildplattenabspielgerät handelt um: einen CD-ROM-Player, einen DVD-ROM-Player, eine CD-RW-Vorrichtung (Vorrichtung zum mehrmaligen Beschreiben einer CD), eine CD-R-Vorrichtung (Vorrichtung zum einmaligen Beschreiben einer CD), oder eine DVD-RAM-Vorrichtung (Vorrichtung zum Überschreiben einer Bildplatte).

6. Platte nach Anspruch 1, wobei die Computervorrichtung umfasst: einen Computer oder eine PDA-Vorrichtung (PDA - *Personal Digital Assistant*).

## Revendications (Revendications pour l'(les) Etat(s) contractant(s) suivant(s): BE, CH, CY, DK, FI, GR, IE, IT, LI, LU, MC, PT, SE, TR)

1. Disque optique lisible sur un lecteur de disques optiques et sur un dispositif de disques optiques d'un dispositif informatisé, sur le disque étant stockées :
des premières données représentant un contenu lisible sur le lecteur de disques optiques et le dispositif de disques optiques du dispositif informatisé, de telle sorte que lors de l'insertion du disque optique dans le lecteur de disques optiques le contenu soit accessible immédiatement ; et
des secondes données représentant un programme informatique conçu pour s'exécuter automatiquement à l'insertion du disque optique dans le dispositif de disques optiques du dispositif informatisé, le programme informatique étant en outre conçu pour empêcher l'accès au contenu excepté comme permis par ce dernier.

2. Disque selon la revendication 1, dans lequel le programme informatique est en outre conçu pour rester chargé dans le dispositif informatisé, de telle sorte que l'accès à des disques optiques suivants insérés dans le dispositif de disques optiques soit également contrôlé par le programme informatique.

3. Disque selon la revendication 1, dans lequel le programme informatique sert à empêcher l'accès au contenu excepté comme permis par celui-ci en désolidarisant le disque optique du dispositif informatisé, de telle sorte que l'accès au contenu par le dispositif informatisé soit contrôlé par le programme informatique.

4. Disque selon la revendication 1, dans lequel le disque comprend l'un de : un CD-ROM, et un DVD-ROM.

5. Disque selon la revendication 1, dans lequel le lecteur de disques optiques comprend l'un de : un lecteur de CD, et un lecteur de DVD.

6. Disque selon la revendication 1, dans lequel le dispositif de disques optiques comprend l'un de : un lecteur de CD-ROM, un lecteur de DVD-ROM, un dispositif de CD-RW, un dispositif de CD-R, et un dispositif de DVD-RAM.

7. Disque selon la revendication 1, dans lequel le dispositif informatisé comprend l'un de : un ordinateur, et un assistant numérique personnel (PDA).

## Revendications (Revendications pour l'(les) Etat(s) contractant(s) suivant(s): AT, DE, ES, FR, GB, NL)

1. Disque optique lisible sur un lecteur de disques optiques et sur un dispositif de disques optiques d'un dispositif informatisé, sur le disque étant stockées :
des premières données représentant un contenu lisible sur le lecteur de disques optiques et le dispositif de disques optiques du dispositif informatisé, de telle sorte que lors de l'insertion du disque optique dans le lecteur de disques optiques le contenu soit accessible immédiatement ; et
des secondes données représentant un programme informatique conçu pour s'exécuter automatiquement à l'insertion du disque optique dans le dispositif de disques optiques du dispositif informatisé, le programme informatique étant en outre conçu pour empêcher l'accès au contenu excepté comme permis par celui-ci, dans lequel le programme informatique est en outre conçu pour rester chargé dans le dispositif informatisé, de telle sorte que l'accès à des disques optiques suivants insérés dans le dispositif de disques optiques soit également contrôlé par le programme informatique.

2. Disque selon la revendication 1, dans lequel le programme informatique sert à empêcher l'accès au contenu excepté comme permis par celui-ci en désolidarisant le disque optique du dispositif informatisé, de telle sorte que l'accès au contenu par le dispositif informatisé soit contrôlé par le programme informatique.

3. Disque selon la revendication 1, dans lequel le disque comprend l'un de : un CD-ROM, et un DVD-ROM.

4. Disque selon la revendication 1, dans lequel le lecteur de disques optiques comprend l'un de : un lecteur de CD, et un lecteur de DVD.

5. Disque selon la revendication 1, dans lequel le dispositif de disques optiques comprend l'un de : un lecteur de CD-ROM, un lecteur de DVD-ROM, un dispositif de CD-RW, un dispositif de CD-R, et un dispositif de DVD-RAM.

6. Disque selon la revendication 1, dans lequel le dispositif informatisé comprend l'un de : un ordinateur, et un assistant numérique personnel (PDA).
